# EUROPÄISCHE PATENTSCHRIFT

(11) **EP 3 831 181 B1**
(45) Veröffentlichungstag und Bekanntmachung des Hinweises auf die Patenterteilung: **21.02.2024**
(21) Anmeldenummer: 19213583.8
(22) Anmeldetag: 04.12.2019
(51) Int. Cl.: A01D 34/416

(54) **FADENSPULE FÜR EINEN FADENMÄHKOPF**
THREAD COIL FOR A THREAD HEAD
BOBINE DE FIL POUR TÊTE FAUCHEUSE À FIL

(43) Veröffentlichungstag der Anmeldung: 09.06.2021
(73) Patentinhaber: Andreas Stihl AG & Co. KG, 71336 Waiblingen (DE)
(72) Erfinder: SCHMIDT, Sebastian, 76433 Kirchheim a. N. (DE); HAUG, Simon, 71336 Waiblingen (DE); ZAPPE, Sebastian, 71737 Kirchberg an der Murr (DE); BRENNER, Christoph, 71116 Gärtringen (DE); RETHABER, Achim, 70736 Fellbach (DE); PETERSEN, Björn, 71723 Grossbottwar (DE); BUCHNER, Stefan, 87484 Nesselwang (DE)
(74) Vertreter: Karzel, Philipp

(56) Entgegenhaltungen:
- EP-A1- 3 130 212
- EP-A1- 3 622 794
- CN-A- 105 830 622
- KR-A- 20100 119 313
- US-A- 5 765 287
- US-A1- 2011 000 091
- US-A1- 2013 205 596
- US-A1- 2019 124 833
- US-B2- 8 910 388

## Beschreibung

Die Erfindung betrifft eine Fadenspule für einen Fadenmähkopf.

Ein Freischneider dient zum Mähen von Gras, Gestrüpp oder Ähnlichem. Hierzu wird ein Fadenmähkopf mit einem Werkzeug um eine Drehachse des Fadenmähkopfes rotierend angetrieben, wodurch das Gras bei Kontakt mit dem Werkzeug abgeschnitten wird. Als Werkzeug werden insbesondere Schneidfäden eingesetzt, welche im Betrieb des Fadenmähkopfes einem gewissen Verschleiß unterliegen. Um den Schneidfaden nachstellen zu können, kann dieser von einer Fadenspule des Fadenmähkopfs abgewickelt werden, so dass das Mähen mit dem Fadenmähkopf, ohne einen vollständigen Wechsel des Schneidfadens vorsehen zu müssen, weiterhin ohne Beeinträchtigung der Schneidfunktionen erfolgen kann.

Es sind Fadenmähköpfe bekannt, deren Fadenspule zwei Spulenkammern zum Auf wickeln jeweils eines Schneidfadens umfassen. An jeder Spulenkammer sind zwei Fadenhalterungen vorgesehen, die die Klemmung verschieden dicker Schneidfäden ermöglichen. Nachteilig an derartigen Fadenmähköpfen ist, dass im Betrieb eines solchen Fadenmähkopfes äußerst hohe Belastungen auftreten.

Aus der US 2011/0000091 A1 ist ein Fadenmähkopf bekannt, der eine Fadenhalterung mit zwei um 180° versetzten Fadenöffnungen aufweist.

EP 3 622 794 A1 ist Stand der Technik nach Artikel 54 (3) EPÜ und offenbart eine Fadenspule mit den Merkmalen des Oberbegriffs des Anspruchs 1.

Der Erfindung liegt die Aufgabe zugrunde, eine Fadenspule derart weiterzubilden, dass die auf die Fadenspule im Betrieb des Fadenmähkopfes wirkenden Belastungen reduziert werden und zugleich eine ergonomische Handhabung der Fadenspule für den Bediener ermöglicht wird.

Diese Aufgabe wird durch ein Arbeitsgerät mit den Merkmalen gemäß Anspruch 1 gelöst.

Der erfindungsgemäßen Fadenspule liegt die Erkenntnis zugrunde, dass die auf den Fadenmähkopf wirkenden hohen Belastungen im Betrieb des Fadenmähkopfes aus einer Unwucht der Fadenspule resultieren. Diese Unwucht ist im Wesentlichen auf die Anordnung der Schneidfäden in den Spulenkammern zurückzuführen, wobei sich die Anordnung der Schneidfäden wiederum aus der Lage der Fadenhalterungen ergibt. Um die Unwucht an der Fadenspule zu reduzieren, sind die Schneidfäden derart anzuordnen, dass sich die auf die Fadenspule wirkenden Fliehkräfte gegenseitig aufheben bzw. im Kräftegleichgewicht stehen.

Die erfindungsgemäße Fadenspule umfasst mindestens zwei Halterungspaare. Das erste Halterungspaar der mindestens zwei Halterungspaare und das zweite Halterungspaar der mindestens zwei Halterungspaare umfassen jeweils eine der ersten Spulenkammer zugeordnete erste Fadenhalterung und eine der zweiten Spulenkammer zugeordnete zweite Fadenhalterung. Jede Fadenhalterung umfasst eine Öffnung zur Aufnahme eines Schneidfadenendes. Der Durchmesser der Öffnungen der Fadenhalterungen des ersten Halterungspaares ist größer als der Durchmesser der Öffnung der Fadenhalterungen des zweiten Halterungspaares. Die Öffnungen der Fadenhalterungen jeweils eines Halterungspaares weisen einen um die Drehachse gemessenen Winkelabstand von 150° bis 210° auf.

Zum Betrieb des Fadenmähkopfes werden die Schneidfäden auf der Fadenspule aufgewickelt. Hierzu wird jeweils ein Schneidfaden in die Öffnung einer Fadenhalterung eines Halterungspaares eingesteckt und am Umfang der Fadenspule in der entsprechenden Spulenkammer aufgewickelt. Im Betrieb des Fadenmähkopfes wirken auf die Fadenhalterungen sowie auf die Schneidfäden Fliehkräfte. Da die Öffnungen der Fadenhalterungen jeweils eines Halterungspaares sowie die darin geklemmten Schneidfadenenden zueinander um die Drehachse versetzt angeordnet sind, heben sich die auf die Schneidfäden wirkenden Fliehkräfte im Wesentlichen gegenseitig auf. Die Unwucht der Fadenspule sowie die auf den Fadenmähkopf wirkenden Belastungen sind reduziert. Ferner hat sich herausgestellt, dass sich das Einfädeln der Schneidfäden in zueinander versetzt angeordneten Fadenhalterungen für den Bediener deutlich einfacher gestaltet. Die Halterungspaare bilden durch ihre verschieden großen Öffnungen dem Bediener eine Hilfestellung, welches Halterungspaar bei entsprechendem Schneidfaden zu verwenden ist bzw. in welche Fadenhalterung ein entsprechender Schneidfaden einzufädeln ist.

Die Fadenhalterungen mindestens eines Halterungspaares liegen vorzugsweise mindestens teilweise in einer die Drehachse enthaltenden Längsebene. Vorzugsweise sind die Fadenhalterungen eines Halterungspaares in Blickrichtung der Drehachse bezüglich der Drehachse drehsymmetrisch zueinander angeordnet. Durch diese symmetrische Anordnung der Fadenhalterungen wird eine ausbalancierte Massenverteilung der Fadenspule, insbesondere bei aufgewickelten Schneidfäden, ermöglicht und Unwuchten bei Drehung der Fadenspule vermieden.

Es ist vorteilhaft vorgesehen, dass die Fadenhalterungen eines Halterungspaares aus gleichartigen Fadenkammern gebildet sind. Der Schneidfaden ist vorzugsweise lediglich über die Öffnung der Fadenhalterung in die Fadenkammer einsteckbar. Folglich kann der Schneidfaden nur auf einer Seite der Fadenhalterung eingesteckt werden, wodurch eine falsche Aufwickelrichtung des Schneidfadens auf die Fadenspule vermieden wird. Die Fadenkammer ist vorzugsweise an ihrer der Öffnung gegenüberliegenden Seite geschlossen und bildet einen Anschlag für das Schneidfadenende. Der Schneidfaden wird beim Einfädeln in die Fadenkammer vorzugsweise bis zum Anschlag geschoben. Dadurch liegen die Schneidfadenenden beider Schneidfäden jeweils an den Anschlägen der Fadenkammern eines Halterungspaares an, wodurch eine symmetrische Anordnung der Schneidfäden gewährleistet werden kann.

Die Fadenspule weist eine Drehrichtung auf, wobei die Öffnung vorzugsweise an der in Drehrichtung vorne liegenden Seite der Fadenkammer ausgebildet ist. Die Drehrichtung entspricht der Drehrichtung der Fadenspule im Betrieb eines Fadenmähkopfes.

Es ist vorteilhaft vorgesehen, dass der Durchmesser der Öffnungen der Fadenhalterungen des zweiten Halterungspaares höchstens 90% des Durchmessers der Öffnungen der Fadenhalterungen des ersten Halterungspaares beträgt. Durch die unterschiedlich großen Öffnungen der Fadenhalterungen können Schneidfäden mit verschieden großen Durchmessern in den Fadenhalterungen gehalten werden. Dadurch kann in Abhängigkeit des Einsatzzweckes ein entsprechender Schneidfaden mit einem für diesen Einsatz geeigneten Durchmesser vorgesehen werden.

Es ist vorteilhaft vorgesehen, dass die Fadenspule eine erste Spulenwand, eine zweite Spulenwand und eine zwischen der ersten Spulenwand und der zweiten Spulenwand angeordnete Zwischenwand aufweist. Die erste Spulenwand, die zweite Spulenwand und die Zwischenwand sind vorzugsweise durch eine sich in Richtung der Drehachse erstreckende Umfangswand miteinander verbunden. Die Fadenhalterungen liegen in Richtung der Drehachse vorzugsweise an der Zwischenwand an. Durch die Anordnung der Fadenhalterungen an der Zwischenwand werden die Massenkräfte, die bei Betrieb des Fadenmähkopfes an der Fadenspule auftreten können, reduziert. Die erste Fadenhalterung des einen Halterungspaares und die zweite Fadenhalterung des anderen Halterungspaares sind vorzugsweise spiegelsymmetrisch bezüglich der Zwischenwand angeordnet. Diese Anordnung dient ebenfalls einer ausbalancierten Massenverteilung der Fadenspule.

Die Fadenspule weist an einer Stirnseite vorzugsweise eine Kontur für eine Weiterschaltvorrichtung auf. Im Betrieb des Fadenmähkopfes ist die Fadenspule mit dem Gehäuse des Fadenmähkopfes in Drehrichtung über die Kontur formschlüssig verbunden. Bei Betätigung der Weiterschaltvorrichtung wird der Formschluss zwischen dem Gehäuse des Fadenmähkopfes und der Fadenspule aufgehoben. Die Fadenspule kann dann relativ zum Gehäuse in eine Abwickelrichtung gedreht werden, wodurch sich der Schneidfaden von der Fadenspule abwickelt. Der Abwickelvorgang erfolgt in eingebautem Zustand der Fadenspule. Eine Demontage des Fadenmähkopfes ist nicht notwendig.

Die Fadenspule besitzt vorzugsweise mindestens einen durchgehenden Fadenkanal, durch den der Schneidfaden hindurchgesteckt und aufgewickelt werden kann. Ein derartiger durchgehender Kanal ermöglicht dem Bediener ein Aufwickeln des Schneidfadens in montiertem Zustand des Fadenmähkopfes. Demnach steckt der Bediener den Schneidfaden in den Fadenkanal, wobei anschließend die Fadenspule relativ zum Fadenmähkopf gedreht wird. Die dann freien Enden des Schneidfadens wickeln sich jeweils in einer der zwei Spulenkammern auf. Der Fadenkanal weist vorzugsweise eine Eintrittsöffnung und eine Austrittsöffnung auf, wobei die Eintrittsöffnung und die Austrittsöffnung in Umfangsrichtung vorzugsweise mittig zwischen zwei Fadenhalterungen eines Halterungspaares angeordnet sind. Die Eintrittsöffnung und die Austrittsöffnung des Fadenkanals sind vorzugsweise in der Zwischenwand angeordnet. Dies begünstigt eine ausbalancierte Massenverteilung der Fadenspule zur Vermeidung von Unwuchten.

Es ist insbesondere vorgesehen, dass die Fadenspule eine in Richtung der Drehachse an die erste Spulenwand angrenzende außerhalb der Spulenkammer angeordnete Betätigungsvorrichtung umfasst. Die Betätigungsvorrichtung weist einen sich radial zur Drehachse erstreckenden Haltevorsprung zum teilweisen Hintergreifen durch einen Bediener auf. In der ersten Spulenwand ist dem Haltevorsprung gegenüberliegend mindestens eine Griffmulde ausgebildet.

Die Betätigungsvorrichtung dient zur Betätigung der Weiterschaltvorrichtung des Fadenmähkopfes. Hierfür ist die Fadenspule entgegen einer Federkraft in Richtung der Drehachse zu ziehen, wodurch die formschlüssige Verbindung zwischen dem Gehäuse und der Fadenspule aufgehoben wird, und anschließend relativ zum Gehäuse in eine Abwickelrichtung zu drehen. Dabei wird die Fadenspule an ihrer Betätigungsvorrichtung vom Bediener gehalten und in Richtung weg vom Gehäuse gezogen. Hierbei hintergreift der Bediener den Haltevorsprung der Betätigungsvorrichtung. Durch die in der ersten Spulenwand dem Haltevorsprung gegenüberliegend ausgebildete mindestens eine Griffmulde hat der Bediener mehr Raum, den Haltevorsprung zu hintergreifen. Somit ermöglicht die Griffmulde dem Bediener einen besseren Halt an der Betätigungsvorrichtung.

Die Fadenspule besitzt vorzugsweise eine Zwischenwand und mindestens einen zumindest teilweise in der Zwischenwand verlaufenden durchgehenden Fadenkanal, durch den der Schneidfaden vorzugsweise vollständig durch die Fadenspule gesteckt und aufgewickelt werden kann. Der Fadenkanal weist vorzugsweise eine Eintrittsöffnung und eine Austrittsöffnung auf. Die Eintrittsöffnung und die Austrittsöffnung weisen insbesondere einen um die Drehachse gemessenen Winkelabstand von 150° bis 210° auf. Die mindestens eine Griffmulde ist bevorzugt in einem Umfangsbereich angeordnet, der zwischen der Eintrittsöffnung und der Austrittsöffnung liegt. Vorzugsweise sind mehrere Griffmulden, insbesondere zwei Griffmulden, in einem Umfangsbereich angeordnet.

Die Eintrittsöffnung und die Austrittsöffnung des Fadenkanals an der Zwischenwand bedingen eine lokale Aufdickung der Zwischenwand. Die Spulenkammern weisen jeweils eine in Richtung der Drehachse gemessene Höhe auf. Die Höhe der Spulenkammern ist an der lokalen Aufdickung der Zwischenwand reduziert. Um die Höhe der Spulenkammern und damit auch den zum Aufwickeln des Schneidfadens zur Verfügung stehenden Raum nicht zusätzlich zu reduzieren, ist die mindestens eine Griffmulde, insbesondere zwei Griffmulden, in dem Umfangsbereich angeordnet. Dadurch wird zwischen der Aufdickung an der Zwischenwand und der ersten Spulenwand ausreichend Raum zum Aufwickeln des Schneidfadens bereitgestellt. Es entsteht an der Eintrittsöffnung und an der Austrittsöffnung der Zwischenwand keine zusätzliche Verengung der Spulenkammer, so dass weiterhin ein einfaches Aufwickeln des Schneidfadens gewährleistet ist.

Weitere Merkmale der Erfindung ergeben sich aus der Beschreibung und der Zeichnung, in der nachstehend im Einzelnen beschriebene Ausführungsbeispiele der Erfindung wiedergegeben sind. Es zeigen:
- Fig. 1: eine schematische Darstellung eines von einem Bediener gehaltenen Freischneiders,
- Fig. 2: eine Seitenansicht eines Ausführungsbeispiels eines Fadenmähkopfes,
- Fig. 3: eine Draufsicht des Fadenmähkopfes nach Fig. 2,
- Fig. 4: eine Schnittdarstellung des Fadenmähkopfes in Richtung des Pfeils 4 nach Fig. 3,
- Fig. 5: eine perspektivische Darstellung der erfindungsgemäßen Fadenspule,
- Fig. 6: eine Seitendarstellung der Fadenspule nach Fig. 5,
- Fig. 7: eine seitliche Schnittdarstellung der Fadenspule durch die Fadenhalterungen,
- Fig. 8: eine Schnittdarstellung der Fadenspule in Richtung des Pfeils 8 nach Fig. 6,
- Fig. 9: eine Seitenansicht der Fadenspule in einer gegenüber der Fig. 6 um 90° um die Drehachse gedrehten Stellung,
- Fig. 10: eine Seitenansicht eines alternativen Ausführungsbeispiels der Fadenspule und
- Fig. 11: eine perspektivische Darstellung eines alternativen Ausführungsbeispiels der Fadenspule.

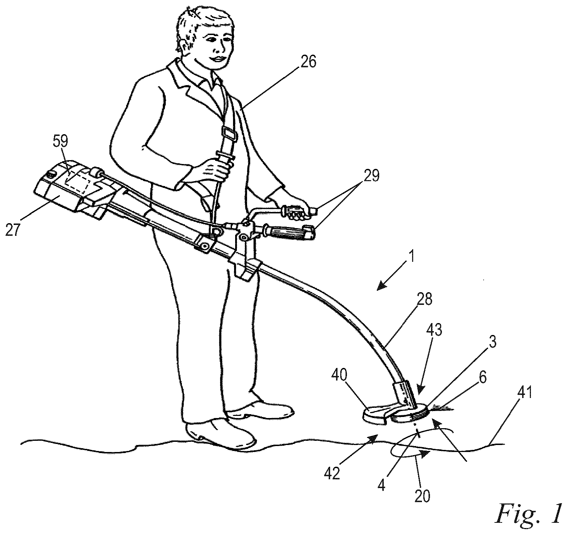

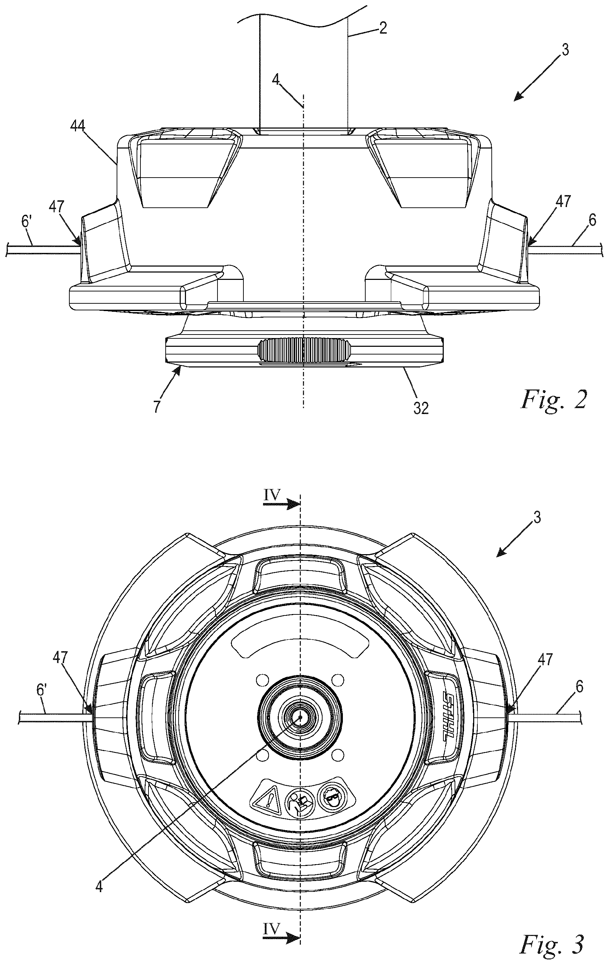

Fig. 1 zeigt in einer schematischen Darstellung einen Freischneider 1. Der Freischneider 1 wird von einem Bediener 26 gehalten. Der Freischneider 1 besitzt ein hinteres Ende mit einem hinteren Gehäuse 27 und ein vorderes Ende, aus dem eine Antriebswelle 2 (Fig. 2) ragt. Ein Schaft 28 verbindet das hintere Ende und das vordere Ende. Am Schaft 28 sind Handgriffe 29 zum Führen des Freischneiders 1 angeordnet. An das vordere Ende des Freischneiders 1 schließt ein Fadenmähkopf 3 an. Der Fadenmähkopf 3 ist an der Antriebswelle 2 befestigt und wird rotierend um eine Drehachse 4 von einem lediglich schematisch angedeuteten Antriebsmotor 59 in einer Drehrichtung 20 angetrieben. Der Antriebsmotor 59 ist im hinteren Gehäuse 27 angeordnet, wobei im Schaft 28 eine Antriebswelle verläuft. Es kann vorgesehen sein, dass die Antriebswelle im Schaft unmittelbar mit der Antriebswelle 2 für den Fadenmähkopf 3 verbunden ist, demnach kein Getriebe zwischengeschaltet ist. In einer alternativen, nicht dargestellten Ausführung kann der Antriebsmotor 59, der insbesondere ein Elektromotor ist, auch an einem nicht dargestellten vorderen Gehäuse, das am vorderen Ende angeordnet ist, angeordnet sein. Vorteilhaft befindet sich im vorderen Gehäuse auch ein Getriebe. Der Fadenmähkopf 3 ist an der im Betrieb dem Bediener 26 zugewandten Seite von einer Schutzhaube 40 abgedeckt. Der Fadenmähkopf 3 besitzt mindestens ein Werkzeug, welches im Ausführungsbeispiel als ein Schneidfaden 6, 6' zum Schneiden von Schnittgut wie Gras, Gestrüpp oder dgl. dient. Am Fadenmähkopf 3 ist eine im Betrieb dem Boden 41 zugewandte Unterseite 42 ausgebildet, die an der dem Schaft 28 abgewandten Seite des Fadenmähkopfs 3 angeordnet ist. An der dem Schaft 28 zugewandten Seite des Fadenmähkopfes 3 ist die Oberseite 43 des Fadenmähkopfes 3 ausgebildet. Die vom Bediener 26 zwingend zu tragende Schutzkleidung für den Betrieb des Freischneiders 1 ist in der vereinfachten Darstellung in Fig. 1 nicht gezeigt.

In Fig. 2 ist der Fadenmähkopf 3 in einer Seitendarstellung gezeigt. Der Fadenmähkopf 3 umfasst eine Drehachse 4, um die der Fadenmähkopf 3 im Betrieb des Freischneiders gedreht wird. Hierzu wird der Fadenmähkopf 3 von der lediglich schematisch dargestellten Antriebswelle 2 angetrieben. Zudem umfasst der Fadenmähkopf 3 ein Gehäuse 44 und eine am Gehäuse angeordnete Fadenspule 7. Das Gehäuse 44 des Fadenmähkopfes 3 ist topfartig ausgebildet und umfasst im Ausführungsbeispiel ein Dach 45 und eine Umfangswand 46. Das Dach 45 erstreckt sich ausgehend von der Drehachse 4 in radialer Richtung weg von der Drehachse 4. Das Dach 45 ist insbesondere in etwa senkrecht zur Drehachse 4 des Fadenmähkopfes 3 ausgerichtet. Die Umfangswand 46 grenzt an das Dach 45 an und erstreckt sich in Richtung der Drehachse 4.

Wie in den Figuren 2 und 3 gezeigt, können an dem Fadenmähkopf 3 Schneidfäden 6, 6' befestigt werden. Am bevorzugten Ausführungsbeispiel können bis zu zwei Schneidfäden 6, 6', nämlich ein erster Schneidfaden 6 und ein zweiter Schneidfaden 6', befestigt werden. Die Schneidfäden 6, 6' ragen aus dem Gehäuse 44 des Fadenmähkopfes 3 heraus. Hierzu sind im bevorzugten Ausführungsbeispiel an der Umfangswand 46 des Gehäuses 44 zwei sich bezüglich der Drehachse 4 gegenüberliegende Fadenöffnungen 47 vorgesehen, durch welche die Schneidfäden 6, 6' aus dem Gehäuse 44 ragen. Es kann in einer alternativen Ausführung des Fadenmähkopfes 3 zweckmäßig sein, eine andere Anzahl Fadenöffnungen 47 und eine andere Anzahl Schneidfäden 6. 6' vorzusehen.

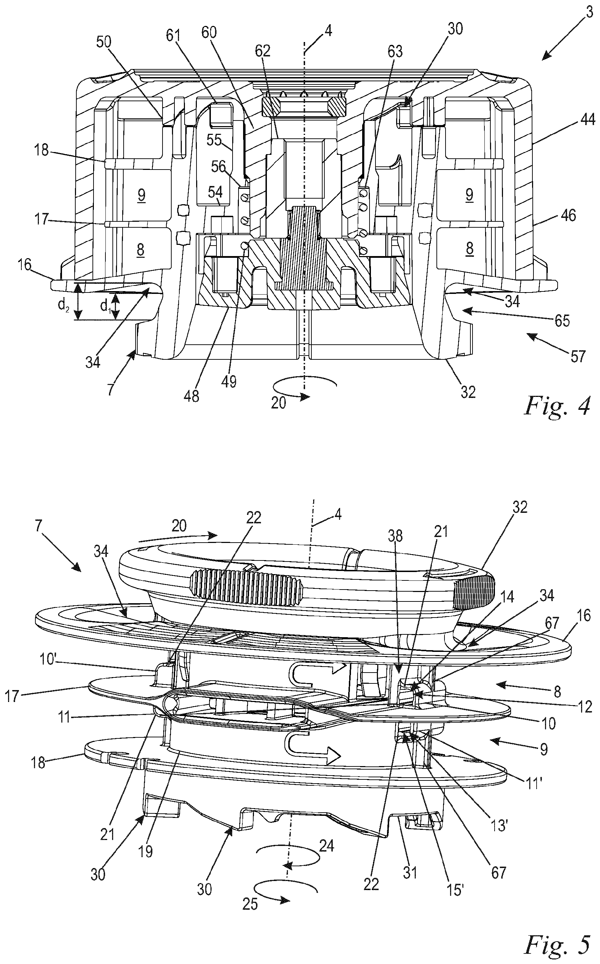

Wie in Fig. 4 gezeigt, erstreckt sich koaxial zur Drehachse 4 ausgehend vom Dach 45 des Gehäuses 44 ein hohlförmiger Zapfen 60. Der Zapfen 60 ist an einer der Fadenspule 7 zugewandten Innenseite 61 des Daches 45 ausgebildet. Auf der Umfangsseite des Zapfens 60 ist die Fadenspule 7 angeordnet. Die Fadenspule 7 ist auf dem Zapfen 60 des Gehäuses 44 drehbar und in Richtung der Drehachse 4, also axial, verschiebbar gelagert. Die Fadenspule 7 ist mittels eines Befestigungselementes 48 auf dem Zapfen 60 des Gehäuses 44 lösbar gehalten. Das Befestigungselement 48 ist als ein Schraubelement ausgebildet und mit einem mit dem Zapfen 60 fest verbundenen Zwischenelement 62 verschraubt. Zwischen der Fadenspule 7 und dem Befestigungselement 48 ist ein Federelement 49 angeordnet, welches im Ausführungsbeispiel als eine Schraubenfeder ausgebildet ist. Das Federelement 49 liegt an seinem einen Ende an einer der Fadenspule 7 zugewandten Innenseite des Befestigungselementes 48 an. Das Federelement 49 liegt mit seinem anderen Ende an einer Anschlagskontur 63 der Fadenspule 7 an. Dabei übt das Federelement 49 eine Federkraft auf die Fadenspule 7 aus, wobei die Federkraft in Richtung der Drehachse 4 zum Dach 45 wirkt. In einer Betriebsstellung 57 des Fadenmähkopfes 3 ist die Fadenspule 7 durch das Federelement 49 gegen das Gehäuse 44 in Richtung der Drehachse 4 gespannt.

Wie in Fig. 4 gezeigt, umfasst der Fadenmähkopf 3 eine Weiterschaltvorrichtung 30, die ein Aufwickeln und ein Abwickeln des Schneidfadens 6, 6' von der Fadenspule 7 in montiertem Zustand des Fadenmähkopfes ermöglicht. Die Weiterschaltvorrichtung 30 ist durch eine Kontur 31 der Fadenspule 7 und eine mit der Kontur 31 zusammenwirkende Gegenkontur 50 des Gehäuses 44 des Fadenmähkopfes 3 gebildet. Die Kontur 31 ist an der dem Dach 45 des Gehäuses 44 zugewandten Stirnseite 64 der Fadenspule 7 ausgebildet. Die Gegenkontur 50 ist an der Innenseite 61 des Dachs 45 des Gehäuses 44 ausgebildet. Die Kontur 31 ist aus einer Vielzahl von in Umfangsrichtung angeordneten Rampen 51 ausgebildet. Die Rampen 51 weisen eine Eingriffsfläche 52 auf, die bezüglich der Drehrichtung 20 am hinteren Ende der Rampe 51 liegt und parallel zur Drehachse 4 ausgerichtet ist. Die Rampe 51 umfasst zudem eine Rückenfläche 53, die an der Eingriffsfläche 52 angrenzt und schräg zur Eingriffsfläche 52 ausgerichtet ist. In der Betriebsstellung 57 bilden die Gegenkontur 50 des Gehäuses 44 und die Kontur 31 der Fadenspule 7 eine in Drehrichtung 20 formschlüssige Verbindung. Dadurch ist die Fadenspule 7 mit dem Gehäuse 44 in der Betriebsstellung 57 in Drehrichtung 20 drehfest verbunden.

Wie in den Figuren 4 und 5 gezeigt, umfasst die Fadenspule 7 eine erste Spulenkammer 8 und eine zweite Spulenkammer 9. Die erste Spulenkammer 8 ist die Kammer, in der ein erster Schneidfaden 6 aufwickelbar ist. Die zweite Spulenkammer 9 ist die Kammer, in der ein zweiter Schneidfaden 6' aufwickelbar ist. Die Fadenspule 7 umfasst eine erste Spulenwand 16, eine zweite Spulenwand 18 und eine zwischen der ersten Spulenwand 16 und der zweiten Spulenwand 18 angeordnete Zwischenwand 17. Die Fadenspule 7 umfasst ferner eine Umfangswand 19, die die erste Spulenwand 16, die Zwischenwand 17 und die zweite Spulenwand 18 miteinander verbindet. Die erste Spulenkammer 8 ist in Richtung der Drehachse 4 durch die erste Spulenwand 16 und die Zwischenwand 17 begrenzt. In radialer Richtung zur Drehachse 4 hin ist die erste Spulenkammer 8 durch die Umfangswand 19 begrenzt. Die zweite Spulenkammer 9 ist in Richtung der Drehachse 4 durch die Zwischenwand 17 und die zweite Spulenwand 18 begrenzt. In radialer Richtung zur Drehachse 4 hin ist die zweite Spulenkammer 8 durch die Umfangswand 19 begrenzt. In einem alternativen Ausführungsbeispiel kann es vorteilhaft sein, die Zwischenwand 17 nur abschnittsweise, insbesondere im Bereich der Eintrittsöffnung 36 und der Austrittsöffnung 37 des Fadenkanals 35, auszubilden. In einem weiteren alternativen Ausführungsbeispiel kann es auch vorteilhaft sein, keine Zwischenwand 17 vorzusehen. Dadurch sind die erste Spulenkammer 8 und die zweite Spulenkammer 9 teilweise, respektive vollständig miteinander verbunden. An der Umfangswand ist ein Steg 54 ausgebildet, der sich radial zur Drehachse 4 in Richtung zur Drehachse 4 der Fadenspule 7 erstreckt und die Umfangswand 19 mit einer Nabe 55 der Fadenspule 7 verbindet. Die Fadenspule 7 ist über ihre Nabe 55 an dem Zapfen 60 des Gehäuses 44 gelagert. An der Nabe 55 ist eine Schulter 56 mit der Anschlagskontur 63 ausgebildet, die zur Auflage des Federelementes 49 dient. Die Fadenspule 7 wird mittels des Federelementes 49 an der Schulter 56 der Nabe 55 in Richtung zum Dach 45 des Gehäuses 44 vorgespannt. In der Betriebsstellung 57 liegt die erste Spulenwand 16 an der dem Dach 45 abgewandten Stirnseite der Umfangswand 46 des Gehäuses 44 an. Dadurch ist der von dem Dach 45 und der Umfangswand 46 des Gehäuses 44 gebildete Innenraum, in dem die Fadenspule 7 angeordnet ist, abgeschlossen und gegenüber Verschmutzungen geschützt.

Wie in den Figuren 4 und 5 gezeigt, umfasst die Fadenspule 7 eine Betätigungsvorrichtung 32 zur Betätigung der Weiterschaltvorrichtung 30. Die Betätigungsvorrichtung 32 ist an der ersten Spulenwand 16 angrenzend außerhalb der Spulenkammern 8, 9 angeordnet. Im bevorzugten Ausführungsbeispiel ist die Fadenspule 7 mit ihrer Betätigungsvorrichtung 32 einteilig ausgebildet. Die Betätigungsvorrichtung 32 umfasst im Ausführungsbeispiel einen sich radial zur Drehachse 4 nach außen hin erstreckenden Haltevorsprung 33, der zum Hintergreifen eines Bedieners 26 ausgebildet ist. Der Abwickelvorgang des Schneidfadens 6, 6' unter Betätigung der Weiterschaltvorrichtung 30 ist nachfolgend kurz erläutert:
Beim Aufwickeln des Schneidfadens 6, 6' wird dieser entgegen der Drehrichtung 20 auf die Fadenspule 7 gewickelt. Zum Abwickeln des Schneidfadens 6, 6' ist die Fadenspule 7 relativ zum Gehäuse 44 in eine Abwickelrichtung 25 der Fadenspule 7 um die Drehachse 4 zu drehen. Dabei ragt das freie Ende des Schneidfadens 6, 6' aus den Fadenöffnungen 47 des Gehäuses 44. Das freie Ende des Schneidfadens 6, 6' stützt sich beim Abwickeln am Gehäuse 44 ab, so dass sich der aus dem Gehäuse 44 ragende Anteil des Schneidfadens 6, 6' verlängert. Die Abwickelrichtung 25 der Fadenspule 7 ist der Drehrichtung 20 entgegengesetzt.

Zum Abwickeln des Schneidfadens 6, 6' ist die Fadenspule 7 entgegen der von dem Federelement 49 ausgeübten Federkraft in Richtung weg vom Gehäuse 44 in eine Außerbetriebsstellung zu ziehen. Dadurch wird der Formschluss zwischen Kontur 31 der Fadenspule 7 und der Gegenkontur 50 des Gehäuses 44 aufgehoben. Die zur Überwindung der Federkraft notwendige Zugkraft ist im bevorzugten Ausführungsbeispiel vom Bediener aufzubringen. Hierzu kann der Bediener die Fadenspule auf einfache Weise am Haltevorsprung 33 der Betätigungsvorrichtung 32 greifen und die Fadenspule 7 weg vom Dach 45 des Gehäuses 44 ziehen. Die Fadenspule 7 ist in dieser Außerbetriebsstellung in die Abwickelrichtung 25 entgegen der Drehrichtung 20 relativ zum Gehäuse 44 drehbar. Der Schneidfaden 6, 6' wird bei Drehung der Fadenspule 7 in die Abwickelrichtung 25 von den Spulenkammern 8, 9 abgewickelt.

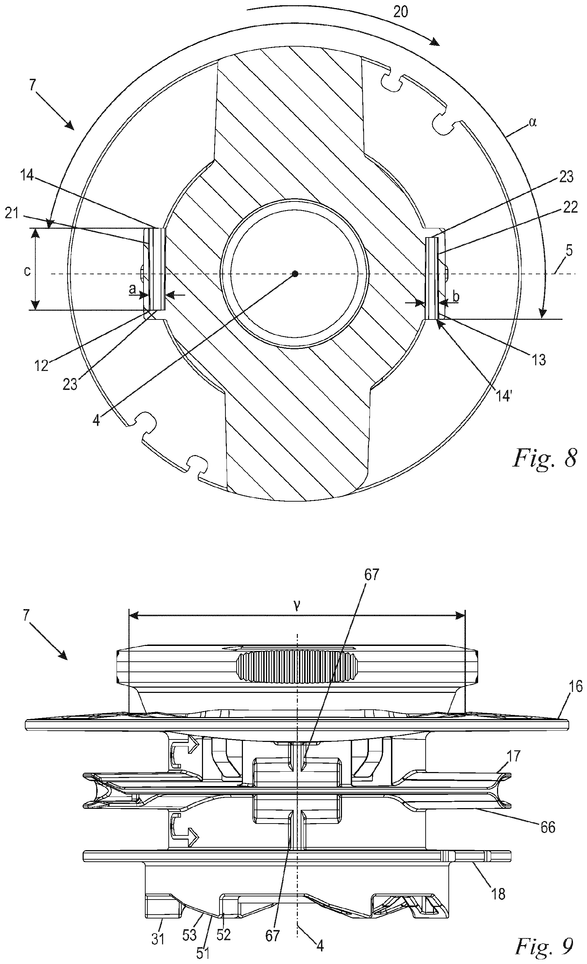

Wie in den Figuren 4 und 5 gezeigt, bildet der Haltevorsprung 33 der Betätigungsvorrichtung 32 mit der ersten Spulenwand 16 eine Griffnut 65, in welche der Bediener hineingreifen und somit den Haltevorsprung 33 hintergreifen kann. Die Griffnut 65 ist in Richtung der Drehachse 4 hin zu den Fadenkammern 8, 9 durch die erste Spulenwand 16 begrenzt. Die Griffnut 65 ist in Richtung der Drehachse 4 weg von den Fadenkammern 8, 9 durch den Haltevorsprung 33 begrenzt. Um ein besseres Hintergreifen des Haltevorsprungs 33 zu ermöglichen, ist in der ersten Spulenwand 16 mindestens eine Griffmulde 34 vorgesehen. Im bevorzugten Ausführungsbeispiel sind zwei Griffmulden 34 vorgesehen. Es kann jedoch auch eine andere Anzahl an Griffmulden 34 zweckmäßig sein. Die in der ersten Spulenwand 16 ausgebildete Griffmulde 34 erstreckt sich in Richtung der ersten Spulenkammer 8. Die Griffnut 65 weist eine außerhalb der Griffmulde 34 in Richtung der Drehachse 4 gemessene Breite di auf, die dem Abstand zwischen der ersten Spulenwand 16 und dem Haltevorsprung 33 entspricht. Zudem weist die Griffnut 65 eine innerhalb der Griffmulde 34 in Richtung der Drehachse 4 gemessene maximale Breite d₂ auf, die dem maximalen Abstand zwischen der Griffmulde 34 und dem Haltevorsprung 33 entspricht. Die maximale Breite d₂ der Griffnut 65 beträgt mindestens 120%, insbesondere mindestens 130% der Breite di der Griffnut 65. Wie in Fig. 9 dargestellt, erstreckt sich die Griffmulde 34 um die Drehachse 4 in einem Winkelabstand γ von mindestens 40°, insbesondere von mindestens 60°, vorzugsweise von in etwa 90°. Durch die partielle Erhöhung der Breite der Griffnut 65 an der Griffmulde 34 ist ausreichend Raum vorhanden, um den Haltevorsprung 33 der Betätigungsvorrichtung 32 auf einfache Weise hintergreifen zu können.

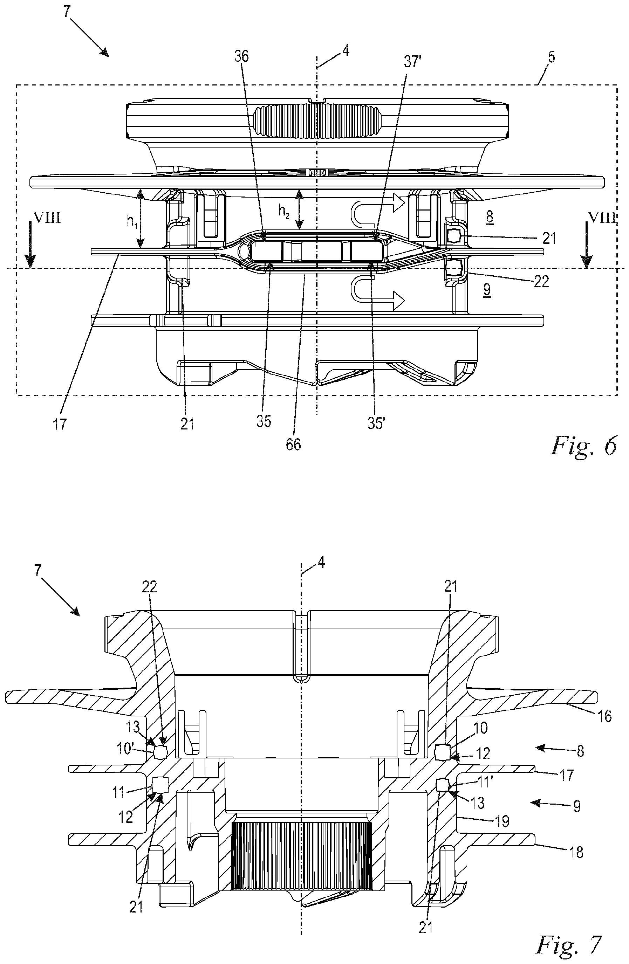

Wie in den Figuren 5 und 6 gezeigt, besitzt die Fadenspule 7 mindestens einen durchgehenden Fadenkanal 35. Der Schneidfaden 6, 6' kann durch den Fadenkanal 35 vollständig hindurchgesteckt und auf die Fadenspule 7 aufgewickelt werden. Im bevorzugten Ausführungsbeispiel weist die Fadenspule 7 zwei durchgehende Fadenkanäle 35, 35' auf. Der durchgehende Fadenkanal 35 verläuft zumindest teilweise in der Zwischenwand 17. Der Fadenkanal 35, 35' weist eine Eintrittsöffnung 36 und eine Austrittsöffnung 37 auf. Die Eintrittsöffnung 36 und die Austrittsöffnung 37 eines Fadenkanals 6, 6' weisen einen um die Drehachse 4 gemessenen Winkelabstand β von vorzugsweise 150° bis 210°, insbesondere von 160° bis 200° auf. Die Eintrittsöffnung 36 und die Austrittsöffnung 37 des Fadenkanals 35, 35' sind in der Zwischenwand 17 angeordnet. Die Eintrittsöffnung 36, die Austrittsöffnung 37 und der Fadenkanal 35 selbst führen zu einer lokalen Aufdickung 66 der Zwischenwand 17. Wie in Fig. 6 gezeigt, weist die erste Spulenkammer 8 eine erste Höhe hi auf, die dem in Richtung der Drehachse 4 außerhalb der Griffmulde 34 und der Aufdickung 66 gemessenen Abstand zwischen der ersten Spulenwand 16 und der Zwischenwand 17 entspricht. Zudem weist die erste Spulenkammer 8 eine zweite Höhe h₂ auf, die dem in Richtung der Drehachse 4 an der Aufdickung 66 gemessenen Abstand zwischen der ersten Spulenwand 16 und der Zwischenwand 17 entspricht. Die erste Höhe hi der ersten Spulenwand 16 ist größer als die zweite Höhe h₂ der Spulenwand 16. Um eine zusätzliche Verengung der ersten Spulenkammer 8 an der Aufdickung 66 zu vermeiden, ist die mindestens eine Griffmulde 34 in Umfangsrichtung der Drehachse 4 versetzt zu der Aufdickung 66 angeordnet. Demnach ist die mindestens eine Griffmulde 34 in einem Umfangsbereich 38 der Fadenspule 7 angeordnet, wobei der Umfangsbereich 38 zwischen der Eintrittsöffnung 36 und der Austrittsöffnung 37 des Fadenkanals 35, 35' liegt. Somit kann eine zusätzliche Verengung der ersten Spulenkammer 8 an der Aufdickung 66 der Zwischenwand 17 vermieden werden. Durch die in Umfangsrichtung der Drehachse 4 versetzte Anordnung der Aufdickung 66 und der Griffmulde 34 kann entlang der gesamten ersten Spulenkammer 8 ausreichend Raum zum Aufwickeln des Schneidfadens 6, 6' bereitgestellt werden.

Wie in Fig. 5 gezeigt, umfasst die Fadenspule 7 zwei Halterungspaare 21, 22. Das erste Halterungspaar 21 der zwei Halterungspaare 21, 22 umfasst eine der ersten Spulenkammer 8 zugeordnete erste Fadenhalterung 10 und eine der zweiten Spulenkammer 9 zugeordnete zweite Fadenhalterung 11. Das zweite Halterungspaar 22 der zwei Halterungspaare 21, 22 umfasst ebenfalls eine der ersten Spulenkammer 8 zugeordnete erste Fadenhalterung 10' und eine der zweiten Spulenkammer 9 zugeordnete zweite Fadenhalterung 11'. Jede Fadenhalterung 10, 10', 11, 11' umfasst eine Öffnung 14, 14', 15, 15' zur Aufnahme eines Schneidfadenendes. Der Schneidfaden 6, 6' wird mit seinem Schneidfadenende in der Fadenhalterung 10, 10', 11, 11' fixiert und anschließend auf die Fadenspule 7 aufgewickelt. Dieser Vorgang ist später näher beschrieben.

Wie in den Figuren 4 und 5 gezeigt, sind die Fadenhalterungen 10, 10', 11, 11' an der Umfangswand 19 der Fadenspule 7 ausgebildet. Demnach sind die Fadenhalterungen 10, 10', 11, 11' möglichst nahe an der Drehachse 4 angeordnet, um ein möglichst geringes Trägheitsmoment der Fadenspule 7 zu erzielen. Die ersten Fadenhalterungen 10, 10' der Halterungspaare 21, 22 sind in der ersten Spulenkammer 8 angeordnet. Die ersten Fadenhalterungen 10, 10' liegen dabei an der Zwischenwand 17, also an der der ersten Spulenwand 16 gegenüberliegenden Seite der Zwischenwand 17, an. Die zweiten Fadenhalterungen 11, 11' der Halterungspaare 21, 22 sind in der zweiten Spulenkammer 9 angeordnet. Die zweiten Fadenhalterungen 11, 11' liegen dabei an der Zwischenwand 17, also an der der zweiten Spulenwand 18 gegenüberliegenden Seite der Zwischenwand 17, an. Im bevorzugten Ausführungsbeispiel sind die erste Fadenhalterung 10, 10' des einen Halterungspaars 21 und die zweite Fadenhalterung 11, 11' des anderen Halterungspaars 21 bezüglich der Zwischenwand 17 gegenüberliegend, insbesondere spiegelsymmetrisch angeordnet. Die Eintrittsöffnung 36 und die Austrittsöffnung 37 des durchgehenden Fadenkanals 35, 35' sind in Umfangsrichtung mittig zwischen zwei Fadenhalterungen 10, 10', 11, 11' eines Halterungspaares 21, 22 angeordnet.

Wie in den Figuren 7 und 8 gezeigt, ist der Durchmesser a der Öffnungen 14, 15 der Fadenhalterungen 10, 11 des ersten Halterungspaares 21 größer als der Durchmesser b der Öffnungen 14', 15' der Fadenhalterungen 10', 11' des zweiten Halterungspaares 22. Der Durchmesser b der Öffnung 14', 15' der Fadenhalterung 10', 11' des zweiten Halterungspaares 22 beträgt höchstens 90% des Durchmessers a der Öffnung 14, 15 der Fadenhalterung 10, 11 des ersten Halterungspaares 21. Der Durchmesser b der Öffnungen der Fadenhalterung 10, 11 des zweiten Halterungspaares beträgt mindestens 60% des Durchmessers a der Öffnungen 14, 15 der Fadenhalterung 10, 11 des ersten Halterungspaares. Die verschiedenen Durchmesser a, b der Öffnungen 14, 14', 15, 15' der Halterungspaare 21, 22 ermöglichen den Einsatz von Schneidfäden 6, 6' mit unterschiedlichen Durchmessern. So können in dem Halterungspaar 21 mit den Öffnungen 10, 11 mit großem Durchmesser a der Öffnungen 14, 15 Schneidfäden 6, 6' mit großem Durchmesser, in dem Halterungspaar 22 mit den Öffnungen 10', 11' mit kleinem Durchmesser b der Öffnungen 14', 15' Schneidfäden 6, 6' mit kleinem Durchmesser gehalten werden.

Wie in Fig. 8 gezeigt, weisen die Öffnungen 14, 14', 15, 15' der Fadenhalterungen 10, 10', 11, 11' jeweils eines Halterungspaares 21, 22 einen um die Drehachse 4 gemessenen Winkelabstand α von 150° bis 210°, insbesondere von 160° bis 200°, in etwa von 180° auf. In dem bevorzugten Ausführungsbeispiel liegen die Fadenhalterungen 10, 10', 11, 11' mindestens eines Halterungspaares 21, 22 mindestens teilweise in einer die Drehachse 4 enthaltenden Längsebene 5. Durch die in Umfangsrichtung der Drehachse 4 versetzte Anordnung der ersten Fadenhalterung 10, 11 und der zweiten Fadenhalterung 10', 11' jeweils eines Halterungspaars 21, 22 sind die Enden der Schneidfäden 6, 6' ebenfalls um den entsprechenden Winkelabstand versetzt zueinander in den Fadenhalterungen 10, 10', 11, 11' eingeklemmt. Die Fadenöffnungen 47 am Gehäuse 44 weisen einen Winkelabstand von etwa 180° auf. Die Schneidfäden treten folglich in einem Winkelabstand von in etwa 180° versetzt zueinander aus dem Gehäuse 44 aus.

Durch die versetzten Fadenhalterungen 10, 10', 11, 11' und die versetzten Fadenöffnungen 47 kann eine symmetrische Aufwicklung der Schneidfäden 6, 6' erfolgen und damit auch eine gleichmäßige Massenverteilung bezüglich der Drehachse 4 erreicht werden. Demnach heben sich die im Betrieb des Fadenmähkopfes 3 auf die Schneidfäden 6, 6' wirkenden Fliehkräfte gegenseitig auf. Dadurch wird eine Unwucht der Fadenspule 7 und damit auch des Fadenmähkopfes 3 vermieden.

Wie insbesondere in Fig. 7 gezeigt, sind die Fadenhalterungen 10, 10', 11, 11' mindestens eines Halterungspaares 21, 22 aus gleichartigen Fadenkammern 12, 13 gebildet. Die Fadenkammern 12, 13 sind über die Öffnungen 14, 14', 15, 15' der Fadenhalterung 10, 10', 11, 11' zugänglich. Dabei ist die Öffnung 14, 14', 15, 15' an der in Drehrichtung 20 vorne liegenden Seite der Fadenkammer 12, 13 ausgebildet. An der in Drehrichtung 20 hinten liegenden Seite der Fadenkammer 12, 13 ist ein Anschlag 23 für das Schneidfadenende gebildet. Zum Einklemmen des Schneidfadens 6, 6' in die Fadenhalterung 10, 10', 11, 11' ist der Schneidfaden 6 über die Öffnung 14, 14', 15, 15' der Fadenhalterung 10, 10', 11, 11' in die Fadenkammer 12, 13 einsteckbar und bis zum Anschlag 23 in die Fadenhalterung 10, 10', 11, 11' einzuschieben. Im bevorzugten Ausführungsbeispiel ist der Schneidfaden 6, 6' lediglich über die Öffnung 14, 14', 15, 15' der Fadenhalterung 10, 10', 11, 11' in die Fadenkammer 12, 13 einsteckbar. Es kann vorgesehen sein, dass an der in Drehrichtung 20 hinten liegenden Seite der Fadenkammern 12, 13 eine weitere Öffnung vorgesehen ist, die lediglich zur Reinigung der Fadenhalterung dient. Dabei ist der Durchmesser der Öffnung derart klein ausgebildet, dass der Schneidfaden 6, 6' trotzdem am Anschlag 23 anschlägt. Ein Durchstecken des Schneidfadens 6, 6' durch die am Anschlag 23 vorgesehene Öffnung ist nicht möglich. Im bevorzugten Ausführungsbeispiel der Fadenspule 7 ist, wie in Fig. 8 gezeigt, die Fadenkammer 12, 13 an ihrer der Öffnung 14, 14', 15, 15' gegenüberliegenden Seite, also am Anschlag 23, geschlossen.

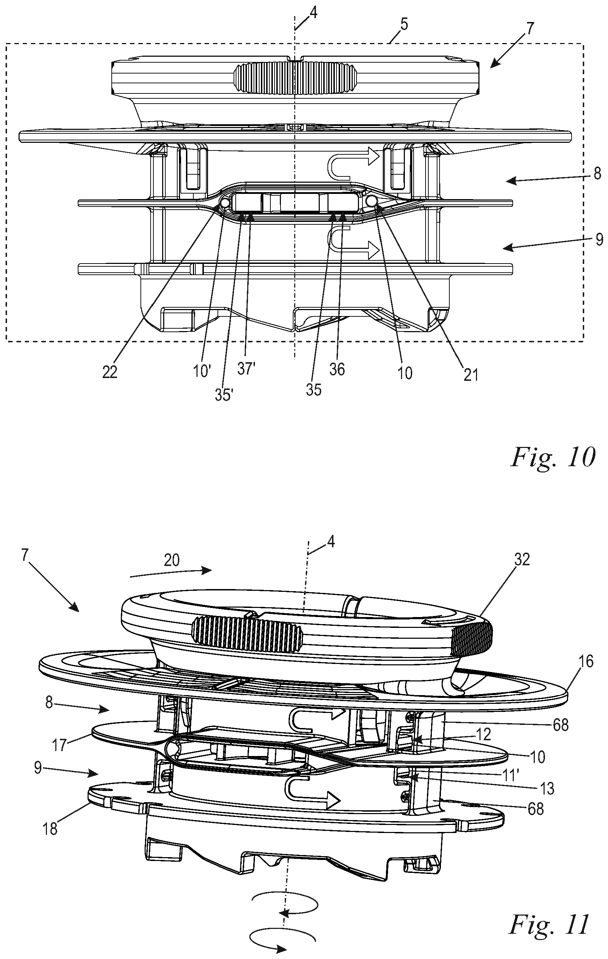

Wie in Fig. 5 gezeigt, ist im bevorzugten Ausführungsbeispiel an der Umfangswand 19 zwischen den ersten Fadenhalterungen 10, 10' und der ersten Spulenwand 16 sowie zwischen den zweiten Fadenhalterungen 11, 11' und der zweiten Spulenwand 18 eine Versteifungsrippe 67 vorgesehen. Die Schneidfäden 6, 6' legen sich beim Aufwickeln über die Versteifungsrippen 67. Die durch den Schneidfaden 6, 6' auf die Fadenspule 7 wirkenden Kräfte werden durch die Versteifungsrippe 67 mechanisch begünstigt auf die Umfangswand 19 verteilt, so dass Spitzenbelastungen an der Umfangswand 19 der Fadenspule 7 vermieden werden. In einer alternativen Ausführung der erfindungsgemäßen Fadenspule 7 nach Fig. 11 kann anstelle der Versteifungsrippe 67 eine Versteifungswand 68 vorgesehen sein. Die Versteifungswand 68 verläuft in Richtung der Drehachse 4 ausgehend von der ersten Fadenhalterung 10, 10' zur ersten Spulenwand 16. Dabei ist die Versteifungswand 68 Teil der Fadenhalterung 10, 10', wodurch sich die Versteifungswand 68 vollständig von der Zwischenwand 17 bis zur ersten Spulenwand 16 erstreckt. In selbiger Ausführung ist eine weitere Versteifungswand 68 in Richtung der Drehachse 4 ausgehend von der zweiten Fadenhalterung 11, 11' zur zweiten Spulenwand 18 verlaufend vorgesehen. Vorzugsweise erstreckt sich die Versteifungswand 68 über die gesamte Länge c der Fadenkammer 12, 13.

Der Bediener kann zwischen zwei Möglichkeiten zum Aufwickeln des Schneidfadens 6, 6' wählen. Ist der Fadenmähkopf 3 demontiert, kann der Bediener den ersten Schneidfaden 6 in die erste Fadenhalterung 10, 10' eines Halterungspaares 21, 22 einstecken und den zweiten Schneidfaden 6' in die zweite Fadenhalterung 11, 11' des gleichen Halterungspaares 21, 22 einstecken. Anschließend ist die Fadenspule 7 in eine der Abwickelrichtung entgegengesetzte Aufwickelrichtung 24 zu drehen. Die Schneidfäden 6, 6' sind dabei von Hand derart zu halten, dass diese sich auf die Fadenspule 7 aufwickeln. Dabei biegen sich die Schneidfäden 6, 6' ausgehend von den Fadenhalterungen 10, 10', 11, 11' um in etwa 180°, wodurch die Schneidfadenenden in den Fadenhalterungen 10, 10', 11, 11' geklemmt gehalten sind. Anschließend ist die Fadenspule 7 mit den in der ersten Spulenkammer 8 und in der zweiten Spulenkammer 9 aufgewickelten Schneidfäden 6, 6' in den Fadenmähkopf 3 einzusetzen, so dass die freien Enden der Schneidfäden 6, 6' aus den Fadenöffnungen 47 des Gehäuses 44 des Fadenmähkopfes 3 herausragen.

Möchte der Bediener den Fadenmähkopf 3 nicht demontieren, kann dieser einen Schneidfaden 6, 6' von außen durch den Fadenkanal 35, 35' durchführen und anschließend die Fadenspule 7 in die Aufwickelrichtung 24 relativ zum Gehäuse 44 drehen. Dabei läuft die Fadenspule 7 über die Rückenflächen 53 der Rampen 51 an der Gegenkontur 50 ab und schiebt sich in Richtung der Drehachse 4 gegen die Federkraft des Federelementes 49 weg vom Gehäuse 44 bis die Rampe 51 in die entsprechende Gegenkontur 50 einrastet. Das Aufbringen einer Zugkraft an der Betätigungsvorrichtung 32 der Fadenspule 7, wie dies beim Abwickeln erforderlich ist, ist nicht notwendig. Es ist ausreichend, die Fadenspule 7 in die Aufwickelrichtung gegenüber dem Gehäuse 44 zu drehen, da die Form der Rampen 51 automatisch zu einer Überwindung der Geometrie der Gegenkontur 50 führt. Derartige Funktionsprinzipien sind auch bei Klinkenvorrichtungen bekannt. Damit bildet der Fadenkanal 35, 35' eine alternative Befestigungsmöglichkeit bezüglich der Fadenhalterungen 10, 10', 11, 11' zur Befestigung des Schneidfadens 6, 6' in den Spulenkammern 8, 9.

In Fig. 10 ist eine weitere erfindungsgemäße Fadenspule 7 gezeigt, die sich gegenüber dem Ausführungsbeispiel nach Fig. 5 lediglich in der Anordnung der Fadenhalterungen 10, 10', 11, 11' unterscheidet. Die Fadenhalterungen 10, 10', 11, 11' sind in der Zwischenwand 17 der Fadenspule 7 angeordnet. Dabei sind die ersten Fadenhalterungen 10, 10' benachbart zu der Eintrittsöffnung 36 des Fadenkanals 35 und die zweiten Fadenhalterungen 11, 11' benachbart zu der Austrittsöffnung 37 des Fadenkanals 35 angeordnet. Vorzugsweise sind die Fadenhalterungen 10, 10', 11, 11' derart zueinander ausgebildet, so dass die Fadenhalterungen 10, 11 des ersten Halterungspaares 21 zur Drehachse 4 achsensymmetrisch ausgebildet sind und dass die Fadenhalterungen 10', 11' des zweiten Halterungspaares 22 zur Drehachse 4 ebenfalls achsensymmetrisch ausgebildet sind. Die Längsrichtung der Fadenhalterung 10, 10', 11, 11' schneidet dabei die Umfangswand 19. Daraus ergeben sich für die Fadenspule 7 nach Fig. 10 die gleiche erfindungsgemäße Funktionsweise und die gleichen Vorteile, wie für die Fadenspule 7 nach Fig. 5.

## Patentansprüche

1. Fadenspule für einen Fadenmähkopf, wobei die Fadenspule (7) eine Drehachse (4) und eine erste Spulenkammer (8) und eine zweite Spulenkammer (9) zum Aufwickeln je eines Schneidfadens (6) umfasst, wobei die Fadenspule (7) mindestens zwei Halterungspaare (21, 22) umfasst, wobei das erste Halterungspaar (21) der mindestens zwei Halterungspaare (21, 22) und das zweite Halterungspaar (22) der mindestens zwei Halterungspaare (21, 22) jeweils eine der ersten Spulenkammer (8) zugeordnete erste Fadenhalterung (10, 10') und eine der zweiten Spulenkammer (9) zugeordnete zweite Fadenhalterung (11, 11') umfassen, wobei jede Fadenhalterung (10, 10', 11, 11') eine Öffnung (14, 14', 15, 15') zur Aufnahme eines Schneidfadenendes umfasst, wobei der Durchmesser (a) der Öffnungen (14, 15) der Fadenhalterungen (10, 11) des ersten Halterungspaars (21) größer als der Durchmesser (b) der Öffnungen (14', 15') der Fadenhalterungen (10', 11') des zweiten Halterungspaars (22) ist,
**dadurch gekennzeichnet, dass** die Öffnungen (14, 14', 15, 15') der Fadenhalterungen (10, 10', 11, 11') jeweils eines Halterungspaars (21, 22) einen um die Drehachse (4) gemessenen Winkelabstand (α) von 150° bis 210° aufweisen.

2. Fadenspule nach Anspruch 1,
**dadurch gekennzeichnet, dass** die Fadenhalterungen (10, 10', 11, 11') mindestens eines Halterungspaars (21, 22) mindestens teilweise in einer die Drehachse (4) enthaltenden Längsebene (5) liegen.

3. Fadenspule nach Anspruch 1 oder 2,
**dadurch gekennzeichnet, dass** die Fadenhalterungen (10, 10', 11, 11') mindestens eines Halterungspaars (21, 22) aus gleichartigen Fadenkammern (12, 13) gebildet sind.

4. Fadenspule nach Anspruch 3,
**dadurch gekennzeichnet, dass** der Schneidfaden (6) lediglich über die Öffnung (14, 14', 15, 15') der Fadenhalterung (10, 10', 11, 11') in die Fadenkammer (12, 13) einsteckbar ist.

5. Fadenspule nach Anspruch 3 oder 4,
**dadurch gekennzeichnet, dass** die Fadenkammer (12, 13) an ihrer der Öffnung (14, 14', 15, 15') gegenüberliegenden Seite geschlossen ist und einen Anschlag (22) für das Schneidfadenende bildet.

6. Fadenspule nach einem der Ansprüche 3 bis 5,
**dadurch gekennzeichnet, dass** die Fadenspule (7) eine Drehrichtung (20) aufweist, und dass die Öffnung (14, 14', 15, 15') an der in Drehrichtung (20) vorne liegenden Seite der Fadenkammer (12, 13) ausgebildet ist.

7. Fadenspule nach einem der Ansprüche 1 bis 6,
**dadurch gekennzeichnet, dass** der Durchmesser (b) der Öffnungen (14', 15') der Fadenhalterungen (10', 11') des zweiten Halterungspaars (22) höchstens 90% des Durchmessers (a) der Öffnungen (14, 15) der Fadenhalterungen (10, 11) des ersten Halterungspaars (11) beträgt.

8. Fadenspule nach einem der Ansprüche 1 bis 7,
**dadurch gekennzeichnet, dass** die Fadenspule (7) eine erste Spulenwand (16), eine zweite Spulenwand (18) und eine zwischen der ersten Spulenwand (16) und
der zweiten Spulenwand (18) angeordnete Zwischenwand (17) aufweist, wobei die erste Spulenwand (16), die zweite Spulenwand (18) und die Zwischenwand (17) durch eine sich in Richtung der Drehachse (4) erstreckende Umfangswand (19) miteinander verbunden sind, wobei die Fadenhalterungen (10, 10', 11, 11') in Richtung der Drehachse (4) an der Zwischenwand (17) anliegen.

9. Fadenspule nach Anspruch 8,
**dadurch gekennzeichnet, dass** die erste Fadenhalterung (10, 10') des einen Halterungspaars (21) und die zweite Fadenhalterung (11, 11') des anderen Halterungspaars (21) spiegelsymmetrisch bezüglich der Zwischenwand (17) angeordnet sind.

10. Fadenspule nach einem der Ansprüche 1 bis 9,
**dadurch gekennzeichnet, dass** die Fadenspule (7) an einer Stirnseite eine Kontur (31) für eine Weiterschaltvorrichtung (30) aufweist.

11. Fadenspule nach einem der Ansprüche 1 bis 10,
**dadurch gekennzeichnet, dass** die Fadenspule (7) mindestens einen durchgehenden Fadenkanal (35, 35') besitzt, durch den der Schneidfaden (6) hindurchgesteckt und aufgewickelt werden kann.

12. Fadenspule nach einem der Ansprüche 1 bis 11,
**dadurch gekennzeichnet, dass** der Fadenkanal (35, 35') eine Eintrittsöffnung (36) und eine Austrittsöffnung (37) aufweist, wobei die Eintrittsöffnung (36) und die Austrittsöffnung (37) in Umfangsrichtung mittig zwischen zwei Fadenhalterungen (10, 10', 11, 11') eines Halterungspaars (21, 22) angeordnet sind.

13. Fadenspule nach einem der Ansprüche 1 bis 12,
**dadurch gekennzeichnet, dass** die Eintrittsöffnung (36) und die Austrittsöffnung (37) des Fadenkanals (35, 35') in der Zwischenwand (17) angeordnet sind.

14. Fadenspule nach Anspruch 8 oder 9,
**dadurch gekennzeichnet, dass** die Fadenspule (7) eine in Richtung der Drehachse (4) an die erste Spulenwand (16) angrenzende außerhalb der Spulenkammer (8, 9) angeordnete Betätigungsvorrichtung (32) umfasst, wobei die Betätigungsvorrichtung (32) einen sich radial zur Drehachse (4) erstreckenden Haltevorsprung (33) zum teilweisen Hintergreifen durch einen Bediener aufweist, und dass in der ersten Spulenwand (16) dem Haltevorsprung (33) gegenüberliegend mindestens eine Griffmulde (34) ausgebildet ist.

15. Fadenspule nach Anspruch 14,
**dadurch gekennzeichnet, dass** die Fadenspule (7) eine Zwischenwand (17) und mindestens einen zumindest teilweise in der Zwischenwand (17) verlaufenden durchgehenden Fadenkanal (35, 35') besitzt, durch den der Schneidfaden (6) vollständig durch die Fadenspule (7) hindurchgesteckt und aufgewickelt werden kann, wobei der Fadenkanal (35, 35') eine Eintrittsöffnung (36) und eine Austrittsöffnung (37) aufweist, wobei die Eintrittsöffnung (36) und die Austrittsöffnung (37) einen um die Drehachse (4) gemessenen Winkelabstand (β) von 150° bis 210° aufweisen, wobei die mindestens eine Griffmulde (34) in einem Umfangsbereich (38), der zwischen der Eintrittsöffnung (36) und der Austrittsöffnung (37) liegt, angeordnet ist.

## Claims

1. Thread spool for a thread mowing head, wherein the thread spool (7) has a rotation axis (4), and a first spool chamber (8) and a second spool chamber (9) for winding in each case one cutting thread (6), wherein the thread spool (7) comprises at least two holder pairs (21, 22), wherein the first holder pair (21) of the at least two holder pairs (21, 22) and the second holder pair (22) of the at least two holder pairs (21, 22) comprise in each case one first thread holder (10, 10') that is assigned to the first spool chamber (8), and one second thread holder (11, 11') that is assigned to the second spool chamber (9), wherein each thread holder (10, 10', 11, 11') comprises one opening (14, 14', 15, 15') for receiving one cutting thread end, wherein the diameter (a) of the openings (14, 15) of the thread holders (10, 11) of the first holder pair (21) is larger than the diameter (b) of the openings (14', 15') of the thread holders (10', 11') of the second holder pair (22),
**characterized in that** the openings (14, 14', 15, 15') of the thread holders (10, 10', 11, 11') of a respective holder pair (21, 22) have an angular spacing (α), measured about the rotation axis (4), of 150° to 210°.

2. Thread spool according to Claim 1,
**characterized in that** the thread holders (10, 10', 11, 11') of at least one holder pair (21, 22) lie at least partially in a longitudinal plane (5) containing the rotation axis (4).

3. Thread spool according to Claim 1 or 2,
**characterized in that** the thread holders (10, 10', 11, 11') of at least one holder pair (21, 22) are formed from thread chambers (12, 13) of the same type.

4. Thread spool according to Claim 3,
**characterized in that** the cutting thread (6) is insertable into the thread chamber (12, 13) only by way of the opening (14, 14', 15, 15') of the thread holder (10, 10', 11, 11').

5. Thread spool according to Claim 3 or 4,
**characterized in that** the thread chamber (12, 13) on the side thereof opposite the opening (14, 14', 15, 15') is closed and forms a detent (22) for the cutting thread end.

6. Thread spool according to one of Claims 3 to 5,
**characterized in that** the thread spool (7) has a rotation direction (20), and **in that** the opening (14, 14', 15, 15') is configured on the side of the thread chamber (12, 13) that lies at the front in the rotation direction (20).

7. Thread spool according to one of Claims 1 to 6,
**characterized in that** the diameter (b) of the openings (14', 15') of the thread holders (10', 11') of the second holder pair (22) is at most 90% of the diameter (a) of the openings (14, 15) of the thread holders (10, 11) of the first holder pair (11).

8. Thread spool according to one of Claims 1 to 7,
**characterized in that** the thread spool (7) has a first spool wall (16), a second spool wall (18), and an intermediate wall (17) disposed between the first spool wall (16) and the second spool wall (18), wherein the first spool wall (16), the second spool wall (18) and the intermediate wall (17) are connected to one another by a circumferential wall (19) extending in the direction of the rotation axis (4), wherein the thread holders (10, 10', 11, 11') bear on the intermediate wall (17) in the direction of the rotation axis (4).

9. Thread spool according to Claim 8,
**characterized in that** the first thread holder (10, 10') of the one holder pair (21) and the second thread holder (11, 11') of the other holder pair (21) are disposed so as to be mirror-symmetrical in relation to the intermediate wall (17).

10. Thread spool according to one of Claims 1 to 9,
**characterized in that** the thread spool (7) on one end side has a contour (31) for an advancing device (30).

11. Thread spool according to one of Claims 1 to 10,
**characterized in that** the thread spool (7) possesses at least one continuous thread duct (35, 35') through which the cutting thread (6) can be inserted and wound up.

12. Thread spool according to one of Claims 1 to 11,
**characterized in that** the thread duct (35, 35') has an entry opening (36) and an exit opening (37), wherein the entry opening (36) and the exit opening (37) in the circumferential direction are disposed so as to be centric between two thread holders (10, 10', 11, 11') of one holder pair (21, 22).

13. Thread spool according to one of Claims 1 to 12,
**characterized in that** the entry opening (36) and the exit opening (37) of the thread duct (35, 35') are disposed in the intermediate wall (17).

14. Thread spool according to Claim 8 or 9,
**characterized in that** the thread spool (7) has an activation device (32) which is disposed outside the spool chamber (8, 9) so as to be adjacent to the first spool wall (16) in the direction of the rotation axis (4), wherein the activation device (32) has a holding protrusion (33) which for partial engagement from behind by an operator extends radially to the rotation axis (4), and **in that** at least one recessed grip (34) is configured in the first spool wall (16) so as to be opposite the holding protrusion (33).

15. Thread spool according to Claim 14,
**characterized in that** the thread spool (7) possesses an intermediate wall (17) and at least one continuous thread duct (35, 35') which runs at least partially in the intermediate wall (17) and through which the cutting thread (6) can be completely inserted through the thread spool (7) and wound up, wherein the thread duct (35, 35') has an entry opening (36) and an exit opening (37), wherein the entry opening (36) and the exit opening (37) have an angular spacing (β), measured about the rotation axis (4), of 150° to 210°, wherein the at least one recessed grip (34) is disposed in a circumferential region (38) that lies between the entry opening (36) and the exit opening (37).

## Revendications

1. Bobine de fil pour une tête faucheuse à fil, la bobine de fil (7) comprenant un axe de rotation (4) et une première chambre de bobine (8) et une deuxième chambre de bobine (9) pour l'enroulement d'un fil de coupe (6) respectif, la bobine de fil (7) comprenant au moins deux paires de supports (21, 22), la première paire de supports (21) des au moins deux paires de supports (21, 22) et la deuxième paire de supports (22) des au moins deux paires de supports (21, 22) comprenant respectivement un premier support de fil (10, 10') associé à la première chambre de bobine (8) et un deuxième support de fil (11, 11') associé à la deuxième chambre de bobine (9), chaque support de fil (10, 10', 11, 11') comprenant une ouverture (14, 14', 15, 15') servant à la réception d'une extrémité de fil de coupe, le diamètre (a) des ouvertures (14, 15) des supports de fils (10, 11) de la première paire de supports (21) étant supérieur au diamètre (b) des ouvertures (14', 15') des supports de fil (10', 11') de la deuxième paire de supports (22),
**caractérisée en ce que** les ouvertures (14, 14', 15, 15') des supports de fil (10, 10', 11, 11') respectivement d'une paire de supports (21, 22) présentent une distance angulaire (α), mesurée autour de l'axe de rotation (4), de 150° à 210°.

2. Bobine de fil selon la revendication 1,
**caractérisée en ce que** les supports de fil (10, 10', 11, 11') d'au moins une paire de supports (21, 22) se situent au moins partiellement dans un plan longitudinal (5) contenant l'axe de rotation (4).

3. Bobine de fil selon la revendication 1 ou 2,
**caractérisée en ce que** les supports de fil (10, 10', 11, 11') d'au moins une paire de supports (21, 22) sont formés à partir de chambres de fil (12, 13) similaires.

4. Bobine de fil selon la revendication 3,
**caractérisée en ce que** le fil de coupe (6) ne peut être inséré dans la chambre de fil (12, 13) que via l'ouverture (14, 14', 15, 15') du support de fil (10, 10', 11, 11').

5. Bobine de fil selon la revendication 3 ou 4,
**caractérisée en ce que** la chambre de fil (12, 13) est fermée sur son côté opposé à l'ouverture (14, 14', 15, 15') et forme une butée (22) pour l'extrémité de fil de coupe.

6. Bobine de fil selon l'une des revendications 3 à 5,
**caractérisée en ce que** la bobine de fil (7) présente un sens de rotation (20), et **en ce que** l'ouverture (14, 14', 15, 15') est formée sur le côté de la chambre de fil (12, 13) qui est situé à l'avant dans le sens de rotation (20).

7. Bobine de fil selon l'une des revendications 1 à 6,
**caractérisée en ce que** le diamètre (b) des ouvertures (14', 15') des supports de fil (10', 11') de la deuxième paire de supports (22) vaut au maximum 90 % du diamètre (a) des ouvertures (14, 15) des supports de fil (10, 11) de la première paire de supports (11).

8. Bobine de fil selon l'une des revendications 1 à 7,
**caractérisée en ce que** la bobine de fil (7) présente une première paroi de bobine (16), une deuxième paroi de bobine (18) et une paroi intermédiaire (17) disposée entre la première paroi de bobine (16) et la deuxième paroi de bobine (18), la première paroi de bobine (16), la deuxième paroi de bobine (18) et la paroi intermédiaire (17) étant reliées les unes aux autres par le biais d'une paroi circonférentielle (19) s'étendant dans la direction de l'axe de rotation (4), les supports de fil (10, 10', 11, 11') s'appuyant contre la paroi intermédiaire (17) dans la direction de l'axe de rotation (4).

9. Bobine de fil selon la revendication 8,
**caractérisée en ce que** le premier support de fil (10, 10') de l'une des paires de supports (21) et le deuxième support de fil (11, 11') de l'autre paire de supports (21) sont disposés en symétrie miroir par rapport à la paroi intermédiaire (17).

10. Bobine de fil selon l'une des revendications 1 à 9,
**caractérisée en ce que** la bobine de fil (7) présente, sur un côté frontal, un contour (31) pour un dispositif d'indexage (30).

11. Bobine de fil selon l'une des revendications 1 à 10,
**caractérisée en ce que** la bobine de fil (7) possède au moins un conduit de fil (35, 35') traversant, à travers lequel le fil de coupe (6) peut être inséré et enroulé.

12. Bobine de fil selon l'une des revendications 1 à 11,
**caractérisée en ce que** le conduit de fil (35, 35') présente une ouverture d'entrée (36) et une ouverture de sortie (37), l'ouverture d'entrée (36) et l'ouverture de sortie (37) étant disposées centralement entre deux supports de fil (10, 10', 11, 11') d'une paire de supports (21, 22) dans la direction circonférentielle.

13. Bobine de fil selon l'une des revendications 1 à 12,
**caractérisée en ce que** l'ouverture d'entrée (36) et l'ouverture de sortie (37) du conduit de fil (35, 35') sont disposées dans la paroi intermédiaire (17).

14. Bobine de fil selon la revendication 8 ou 9,
**caractérisée en ce que** la bobine de fil (7) comprend un dispositif d'actionnement (32) adjacent à la première paroi de bobine (16) dans la direction de l'axe de rotation (4) et disposé à l'extérieur de la chambre de bobine (8, 9), le dispositif d'actionnement (32) présentant une saillie de retenue (33) s'étendant radialement par rapport à l'axe de rotation (4) et destinée à l'entrée en prise par l'arrière partiellement par un utilisateur, et **en ce qu'**au moins un creux de préhension (34) est formé dans la première paroi de bobine (16) à l'opposé de la saillie de retenue (33).

15. Bobine de fil selon la revendication 14,
**caractérisée en ce que** la bobine de fil (7) possède une paroi intermédiaire (17) et au moins un conduit de fil (35, 35') traversant s'étendant au moins partiellement dans la paroi intermédiaire (17), conduit à travers lequel le fil de coupe (6) peut être inséré complètement à travers la bobine de fil (7) et enroulé, le conduit de fil (35, 35') présentant une ouverture d'entrée (36) et une ouverture de sortie (37), l'ouverture d'entrée (36) et l'ouverture de sortie (37) présentant une distance angulaire (β), mesurée autour de l'axe de rotation (4), de 150° à 210°, l'au moins un creux de préhension (34) étant disposé dans une région circonférentielle (38) qui se situe entre l'ouverture d'entrée (36) et l'ouverture de sortie (37).
